# EUROPEAN PATENT APPLICATION

(11) **EP 2 056 521 A1**
(43) Date of publication of application: **06.05.2009**
(21) Application number: 07721262.9
(22) Date of filing: 24.05.2007
(51) Int. Cl.: H04L 9/32

(54) **A METHOD, SYSTEM AND DEVICE FOR ACHIEVING MULTI-PARTY COMMUNICATION SECURITY**

(30) Priority: 15.08.2006 CN 200610037058
(71) Applicant: Huawei Technologies Co., Ltd., Longgang District, Shenzhen Guangdong 518129 (CN)
(72) Inventor: LIU, Ya, Shenzhen, Guangdong 518129 (CN)
(74) Representative: Danfelter, Maria
(86) International application number: PCT/CN2007/001689
(87) International publication number: WO 2008/022520

(57) **Abstract**

A method for achieving multi-party communication security comprises: the group control key management server authenticates the identity of group member devices by running the Transport Layer Security protocol or Datagram Transport Layer Security, and negotiates and establishes the initial session; the group control key management server and group member devices distribute the group session and the key update session to the group member devices by running the group key management sub protocol; when the group control key management server detects the key update event, the group control key management server and the group member devices process the key update by running the group key management sub protocol. The corresponding multi-party communication security system and devices are provided.; The Transport Layer Security protocol or Datagram Transport Layer Security protocol is improved to solve the disadvantages of the current multicast security protocol suite solution, which are bad transplantablity and low arrangablity, and avoid the disadvantages that high cost and high risk with the redeveloping the new technical scheme.

## Description

The present invention claims the priority of a Chinese Patent Application No. 200610037058.9, entitled "Method, System and Device for Realizing Multi-party Communication Security", filed on August 15, 2006, with the Chinese State Intellectual Property Office, the entirety of which is incorporated herein by reference.

### Field of the Invention

The present invention relates to communication and information technology, and particularly to network communication security technology, more particularly to a method, device and system for realizing multi-party communication security.

### Background of the Invention

With the fast development in communication and information technology, the demand for communication is not limited to point-to-point communication, but involves multi-party communication. The multi-party communication is also referred to as group communication, i.e., a communication scenario with more than two participating parties, while a scenario with only two parties is a special case of the multi-party communication. A general scenario of the multi-party communication includes remote multi-party conference, Internet Protocol (IP) telephony, IP television, on-line network game and grid computing etc.

The security demand of the multi-party communication includes: authorization and authentication, secrecy, group member authentication, source authentication, anonymity, integrity and anti-replay. A method for achieving communication security and secrecy is to encrypt multi-party communication messages. The key for encryption and decryption is only known by group members so that it is ensured the encrypted messages may only be decrypted by the group members. The authentication of the group members may also be implemented with the key, because the encrypted multicast messages may be generated correctly only by the group members having the key. Generation and distribution of the key is a critical point for solving the security problem by sharing the key among multi-parties. Such a generation and distribution should be exclusive, i.e., the key may not be obtained by non-group members. Generally, source authentication, integrity and anonymity services are provided through sharing information among two or more parties exclusively. In the multi-party communication, the critical technology of the group key management is how to realize the exclusive key sharing. The generation, distribution and rekeying for the group members are included in the research of group key management. The group key is a key shared by all of the group members in order to secure the multicast messages, for example through encrypting and decrypting operations.

A plurality of protocols are put forward for realizing multi-party communication security by Multicast Security (MSEC) Workgroup with respect to the above technical requirements. The design principle of MSEC protocols is to separate the group key management from data security, and focus on solving the issue of the group key management. MSEC Workgroup has already constituted a number of group key management protocols including Group Secure Association Key Management Protocol (GSAKMP), Group Domain of Interpretation (GDOI) and Multimedia Internet Keying (MIKEY) etc. Each of these protocols lays particular stress on providing a standard group key management solution for the multicast-based data security protocols. From the point of operation mode, MSEC protocol family is suitable for operation in the case of IP layer multicast being supported. For example, GSAKMP and GODI protocols both directly adopt the group key management algorithm requiring multicast services. Although the algorithm may function in unicast mode, the efficiency is greatly affected. The MSEC protocol family is regarded as extendable in terms of the supported data security protocols, for example, Encapsulating Security Protocol (ESP), Authentication Header (AH) and Secure Real-time Transport Protocol (SRTP). The ESP and AH operate in IP layer, while the SRTP operates in Application Layer, and is used for the real-time transmission of multimedia data.

During the research, it is found by the inventor that it is difficult for MSEC protocol family to provide standard Application Programming Interface (API), with which the function of the protocol family may be invoked by applications or protocols, thereby resulting in low portability and poor deployability of the MSEC protocol family.

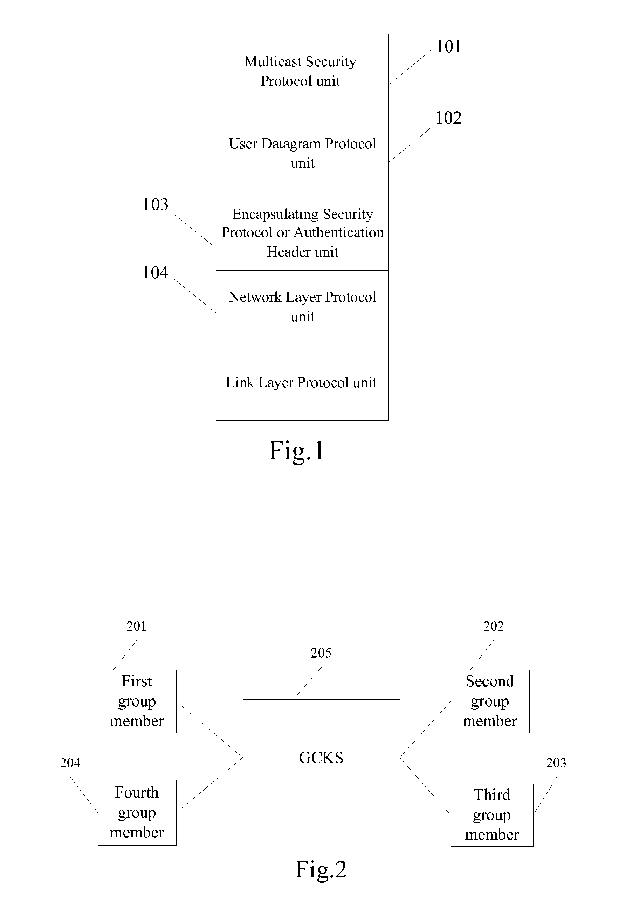

Referring to figure 1, which is a schematic diagram showing the operation of the MSEC protocol family, MSEC protocol unit 101 operates over User Datagram Protocol unit 102 of the Transport Layer, aiming at the key management, while data security is handled by ESP or AH unit 103 of the IP layer 104 and SRTP of the Application Layer. In MSEC protocol family, group key management protocol and data security protocol are designed separately. The individual group key management protocol, such as GDOI and GSAKMP, may only operate separately as a daemon process or an application, and may not provide standard API invoking interface that maybe used by applications to perform the group key management. Therefore, the application developed on the basis of the group key management protocol has poor portability.

The MIKEY protocol has to be embedded in the application invoking its service to function. In other words, if the application needs to invoke the functions of the MIKEY protocol, it has to implement the interaction with the MIKEY protocol inside the application itself. This enhances the coupling degree between the MIKEY protocol and the application. However, each programmer attempting to use the function of the MIKEY protocol has to know the internal mechanism of the protocol, which increases the difficulties of programming.

From the aspect of data security, because currently MSEC protocol family mainly supports ESP, AH and SRTP, in which ESP and AH protocols are both implemented in IP layer and therefore need to run in the core of an operating system, it is also difficult to provide standard data security API invoking interface with this implementing mode, which causes a poor program portability. Furthermore, because the functions of ESP and AH are realized differently from each other in different operating systems, and are even not realized in some operating systems, thereby resulting in poor deployability. However, SRTP is a protocol dedicated to real-time multimedia data transmission; therefore, the function of SRTP may not be implemented in non-multimedia applications

Further, even if the MSEC protocol family is capable of supporting new data security protocols through an extension, applications still may not use the services provided by the MSEC protocol family due to a lack of a universal data security protocol supporting multi-party communication and capable of being invoked directly by the applications.

In the prior art, a solution for two parties communication security based on Transport Layer Security (TLS) or Datagram Transport Layer Security (DTLS) technology is also provided.

TLS and DTLS protocols operate in Client/Server mode, and are able to provide security functions such as authentication, key agreement, rekeying, encryption, integrity protection and anti-replay. The characteristic of TLS and DTLS is to operate in Transport Layer and be able to provide standard APIs so that the functions of the TLS and DTLS may be invoked and managed by the application. The TLS and DTLS run in the process space of application, thereby having a good deployability. However, Transport Layer Security or Datagram Transport Layer Security may only provide security services for communication between two parties. For the communication scenario with three or more parties, multiple sessions have to be established, however, the implementation is complicated and inefficient.

### Summary of the Invention

A method, system and device for realizing multi-party communication security are provided in embodiments of the present invention, which inherit the advantages of good portability and deployability of TLS or DTLS protocols by extending the TLS and DTLS protocols.

A method for realizing multi-party communication security is provided in an embodiment of the present invention, the method includes:

performing, by a Group Control and Keying Server, identification authentication for a group member device, and negotiating with the group member device passing the authentication to create an initiation session;

distributing, by the Group Control and Keying Server, a group session and a rekeying session to the group member device passing the authentication; and

rekeying on the Group Control and Keying Server and the group member device passing the authentication, when a rekeying event is detected by the Group Control and Keying Server.

A system for realizing multi-party communication security is provided in an embodiment of the present invention. The system includes at least one Group Control and Keying Server and at least two group member devices connected to the server. The Group Control and Keying Server includes:

a first transport layer security protocol unit, adapted to run a transport layer security protocol or a datagram transport layer security protocol;

a first group key management sub-protocol unit, connected to the first transport layer security protocol unit and adapted to run a group key management sub-protocol in the Group Control and Keying Server;

a session distributing unit, adapted to distribute a group session and a rekeying session to the group member device under the control of the first group key management sub-protocol unit; and

a rekeying unit, adapted to update automatically the key of the group session and the rekeying session under the control of the first group key management sub-protocol unit.

A management server is also provided in an embodiment of the present invention for group control and group key management of multi-party communication security, and the management server includes:

a first transport layer security protocol unit, adapted to run a transport layer security protocol or a datagram transport layer security protocol;

a first group key management sub-protocol unit, connected to the first transport layer security protocol unit and adapted to run a group key management sub-protocol in the Group Control and Keying Server;

a session distributing unit, adapted to distribute a group session and a rekeying session to the group member device under the control of the first group key management sub-protocol unit; and

a rekeying unit, adapted to update automatically the key of the group session and the rekeying session under the control of the first group key management sub-protocol unit.

A group member device for realizing multi-party communication security is also provided in an embodiment of the present invention, and the group member includes:

a second transport layer security protocol unit, adapted to run the transport layer security protocol or datagram transport layer security protocol;

a second group key management sub-protocol unit, connected to the second transport layer security protocol unit and adapted to run the group key management sub-protocol in the group member device; and

a session receiving unit, adapted to receive the group session and the rekeying session distributed by the Group Control and Keying Server under the control of the second group key management sub-protocol unit.

In the technical solution provided in the embodiments of the present invention, the original TLS or DTLS protocols are enhanced by adding a group key management sub-protocol, a group session and a group rekeying session. A multi-party communication security system is constructed on the basis of the mature security standard TLS and DTLS protocols so that a number of the existing functions and infrastructures may be re-used and improved to readily realize the multi-party communication security.

In the technical solution according to the embodiments of the present invention, a group key management sub-protocol unit and a session distributing unit are added to the Group Control and Keying Server, and a group key management sub-protocol unit and a session receiving unit are added to the group member device to manage the distribution and rekeying of the group session; the group session is adapted to realize the multi-party communication security, including encryption, integrity protection, anti-replay, source authentication and group authentication etc. Therefore, the embodiments of the present invention provide a uniform design of group key management and data security, which run in the application space and may interact with application easily. A standard API interface may be provided to the applications for invoking and management to obtain good portability.

### Brief Description of the Drawings

Figure 1 is a schematic diagram showing the operation of a multicast protocol family in the prior art;

Figure 2 is a diagram showing the architecture of a multi-party communication security system according to an embodiment of the present invention;

Figure 3 is a block diagram showing the architecture of a Group Control and Keying Server according to an embodiment of the present invention;

Figure 4 is a block diagram showing the architecture of a group member device according to an embodiment of the present invention;

Figure 5 is a diagram showing the flowchart of a method for realizing multi-party communication security according to an embodiment of the present invention;

Figure 5a is a diagram showing the flowchart of rekeying in a method for realizing multi-party communication security according to an embodiment of the present invention;

Figure 6 is a diagram showing the protocol model of extended TLS or DTLS according to an embodiment of the present invention.

### Detailed Description of the Invention

The technical solution of the present invention will be illustrated as follows with reference to the drawings.

Referring to figure 2, which is a diagram showing the architecture of a multi-party communication security system according to an embodiment of the present invention, the multi-party communication security system includes a Group Control and Keying Server (GCKS) 205 and four group member devices connected to the Server, i.e., a first group member 201, a second group member 202, a third member 203 and a fourth group member 204. The GCKS 205 is responsible for authorization and authentication of the group member and key management in the multi-party communication security system. A specified device generally serves as the GCKS 205 or a general group member device may also serve as the GCKS 205. It is to be understood that the number of the group member device is not limited to four, but can be three or larger than four.

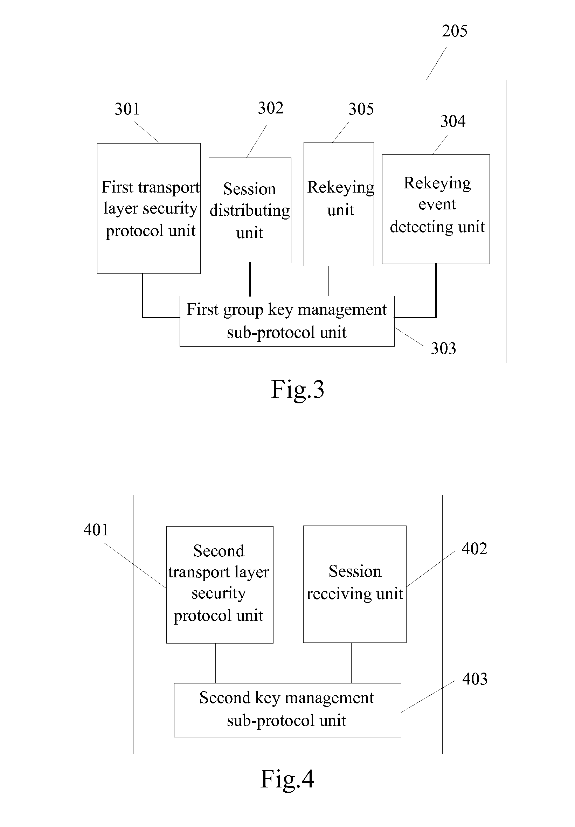

Referring to figure 3, which is a diagram showing the architecture of a Group Control and Keying Server (GCKS) according to an embodiment of the present invention, the GCKS 205 includes:

a first transport layer security protocol unit 301, for running TLS or DTLS protocol;

a session distributing unit 302, for distributing a group session or a rekeying session to group members;

a first group key management sub-protocol unit 303, which is connected with the first transport layer security protocol unit 301 and the session distributing unit 302 respectively, for controlling the distributing of the group session or the rekeying session and the rekeying by running the group key management sub-protocol;

a rekeying event detecting unit 304, which is connected with the first group key management sub-protocol unit 303, for detecting whether a rekeying event exists during the multi-party communication; and

a rekeying unit, which is connected with the first group key management sub-protocol unit 303, for updating automatically the key of the group session and the rekeying session,

Referring to figure 4, which is a block diagram showing the architecture of a group member device in the multi-party communication security system according to an embodiment of the present invention, the group member device includes:

a second transport layer security protocol unit 401, for running TLS or DTLS protocol, and performing identification authentication and initiation session negotiation with the GCKS 205.

a session receiving unit 402, for receiving the group session and the rekeying session distributed by the GCKS 205; and

a second group key management sub-protocol unit 403, which is connected with the second transport layer security protocol unit 401 and the session receiving unit 402 respectively, for controlling the receiving of the group session or the rekeying session;

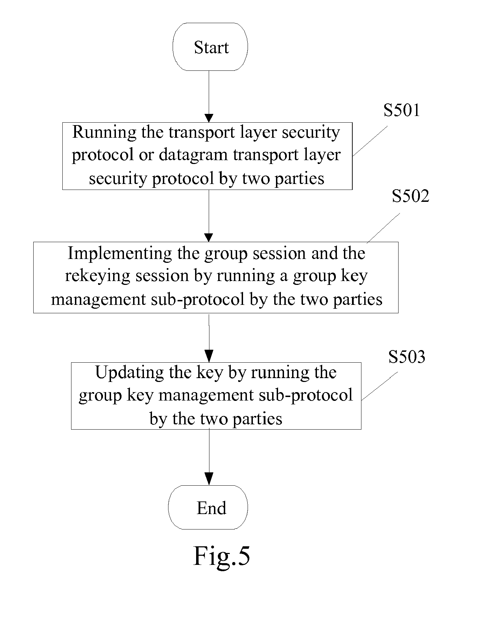

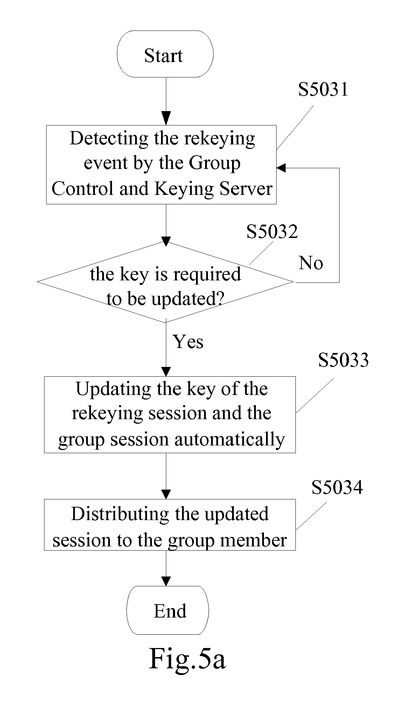

Referring to figure 5, which is a diagram showing the flowchart of a method for realizing multi-party communication security according to an embodiment of the present invention, the GCKS 205 creates an access control list, a group session and a rekeying session by running TLS or DTLS protocol before initiating the multi-party communication. The method includes:

S501, performing identification authentication and negotiating creation of the initiation session by the GCKS 205 and the group member devices through running TLS or DTLS protocol.

The GCKS 205 and the group member devices respectively run TLS or DTLS protocol simultaneously, and perform the identification authentication and initiation session negotiation by running a handshake sub-protocol;

S502, distributing the group session and the rekeying session to the group member devices by respectively running a group key management sub-protocol on the GCKS 205 and the group member devices simultaneously;

The key is distributed by running the rekeying sub-protocol on the GCKS 205 and the group member devices.

The group session and the rekeying session are downloaded actively from the GCKS 205 under the protection of the initiation session, so that the group session and the rekeying session distributed by the GCKS 205 are received.

S503, when the GCKS 205 detects a rekeying event, the GCKS 205 and the group member devices update the key by running the rekeying sub-protocol.

Refer to figure 5a, which is a diagram showing the flowchart of rekeying in a method for realizing multi-party communication security according to an embodiment of the present invention.

At S5031, the GCKS 205 detects a rekeying event, in which the rekeying event includes - but is not limited to - the events such as key exposure and/or key expiration and/or group member leaving and/or new group member joining.

At S5032, the GCKS 205 determines whether it is necessary to update the key based on the rekeying event; if yes, S5033 is performed; otherwise, S5031 is performed.

When the leaving of the fourth group member 204, or key exposure or key expiration or new group member joining etc. is detected, the GCKS 205 makes a decision of updating the key according to the rekeying event.

At S5033, the GCKS 205 updates automatically the key of the rekeying session and the group session.

At S5034, the updated sessions are distributed by running the rekeying sub-protocol on the GCKS 205 and all of the group member devices. If the rekeying is initiated by the GCKS 205, the GCKS 205 distributes the group session and rekeying session in a push mode under the protection of the rekeying session; if the rekeying is initiated by one of the group member devices, all of the group members actively download the updated group session and rekeying session from the GCKS 205 under the protection of the rekeying session.

During the communication, when the GCKS 205 detects various fault events, the GCKS 205 and all of the group member devices exchanges their status information with each other by running an alarm sub-protocol under the protection of the initiation session.

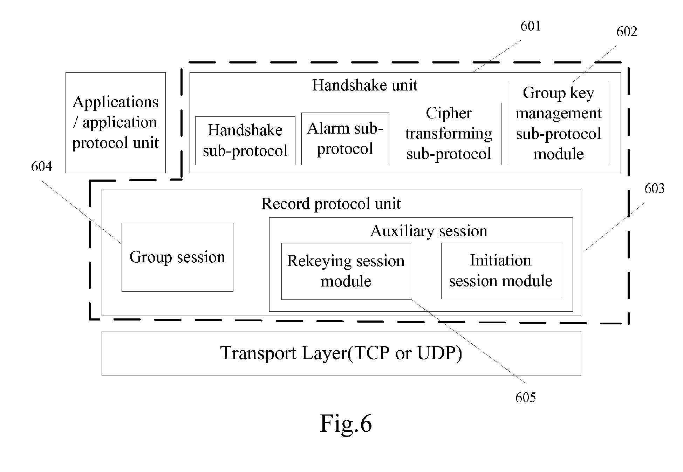

A method, system and device for realizing multi-party communication security provided in the embodiments of the present invention are extended and developed on the basis of the two-party communication security solution using the original TLS or DTLS protocol. Referring to figure 6, which is a diagram showing a protocol model of extended TLS or DTLS according to the present invention, in the technical solution provided in the embodiment of the present invention, a group key management sub-protocol module 602 is added in the handshake unit 601 of the original TLS or DTLS protocol, and a group session module 604 and a rekeying session module 605 are added in the record protocol unit 603. The TLS and DTLS are maturely developed security standard protocols which have plenty of functions and practical applications, whose security has stood the practical test. The multi-party communication security system is constructed based on TLS or DTLS, so that the existing functions and infrastructures may be re-used and improved to a great extent to easily realize the multi-party communication security.

It should be understood by those skilled in the art that all or part of the modules or steps in the above embodiments can be implemented through instructing relative hardware by programs, the programs may be stored in an storage medium readable by computers, such as ROM/RAM, disk and CD. Alternatively, the modules or steps can be implemented respectively as individual integrated circuit modules, or a plurality of them can be implemented as a single integrated circuit module. Therefore, the present invention is not limited to any particular combination of hardware and software.

In conclusion, in the technical solution provided by the embodiments of the present invention, a group key management sub-protocol unit and a session distributing unit are added in the Group Control and Keying Server, and a group key management sub-protocol unit and a session receiving unit are added to the group member devices, so as to control the distribution of the group session and the rekeying. The multi-party communication security is achieved through the group session, wherein the multi-party communication security includes encryption, integrity protection, anti-replay, source authentication and group authentication. Therefore, the embodiments of the present invention provide a uniform design of group key management and data security, which run in the application space and may interact with application easily. A standard API interface may be provided to the applications for invoking and management to obtain good portability.

Therefore, the technical solution provided by the embodiments of the present invention readily solves problems such as the poor portability and low deployability resulted from the existing MSEC protocol family solution, and also avoids the high investment and high risks in developing a new solution.

The above are only the exemplary embodiments of the present invention, which may not be used to define the range of the present invention. All equivalent replacements and modifications are intended to be included in the protection scope of the present invention without departing from the substance of the present invention.

## Claims

1. A method for realizing multi-party communication security, **characterized by** comprising:
performing, by a Group Control and Keying Server, identification authentication for a group member device, and negotiating with the group member device passing the authentication to create an initiation session;
distributing, by the Group Control and Keying Server, a group session and a rekeying session to the group member device passing the authentication; and
rekeying on the Group Control and Keying Server and the group member device passing the authentication, when a rekeying event is detected by the Group Control and Keying Server.

2. The method of claim 1, **characterized in that** the group session and the rekeying session are implemented under the protection of the initiation session in a mode of downloading actively from the Group Control and Keying Server by the group member device.

3. The method of claim 1, **characterized in that,**
performing identification authentication for the group member device is realized by running a transport layer security protocol or a datagram transport layer security protocol; and/or
the rekeying is realized on the basis of a group key management sub-protocol.

4. The method of claim 1 or 2, **characterized in that** the process of rekeying comprises:
detecting, by the Group Control and Keying Server, the rekeying event;
determining whether it is necessary to update the key according to the rekeying event, if yes, updating, by the Group Control and Keying Server, the key of the rekeying session and the group session automatically; otherwise, continuing to detect the rekeying event; and
distributing, by the Group Control and Keying Server, an updated group session and rekeying session to the group member device.

5. The method of claim 4, **characterized in that** distributing the updated group session and rekeying session is performed under the protection of the rekeying session by the Group Control and Keying Server in a push mode; or,
distributing the updated group session and rekeying session is performed under the protection of the rekeying session in a mode of downloading actively by the group member device from the Group Control and Keying Server.

6. The method of claim 1, **characterized in that** the method further comprises:
the Group Control and Keying Server and the group member device interacting with each other to obtain relevant status information under the protection of the initiation session when a fault event is detected.

7. A system for realizing multi-party communication security, which comprises at least one Group Control and Keying Server and at least two group member devices connected to the Group Control and Keying Server, **characterized by** further comprising:
a first transport layer security protocol unit, adapted to run a transport layer security protocol or a datagram transport layer security protocol;
a first group key management sub-protocol unit, connected to the first transport layer security protocol unit and adapted to run a group key management sub-protocol in the Group Control and Keying Server;
a session distributing unit, adapted to distribute a group session and a rekeying session to the group member device under the control of the first group key management sub-protocol unit; and
a rekeying unit, adapted to update automatically the key of the group session and the rekeying session under the control of the first group key management sub-protocol unit.

8. The system of claim 7, **characterized in that** the group member device comprises:
a second transport layer security protocol unit, adapted to run the transport layer security protocol or datagram transport layer security protocol;
a second group key management sub-protocol unit, connected to the second transport layer security protocol unit and adapted to run the group key management sub-protocol in the group member device; and
a session receiving unit, adapted to receive the group session and the rekeying session distributed by the Group Control and Keying Server under the control of the second group key management sub-protocol unit.

9. The system of claim 8, **characterized in that** the Group Control and Keying Server further comprises:
a rekeying event detecting unit, connected with the first group key management sub-protocol unit and adapted to detect whether a rekeying event occurs during the multi-party communication.

10. The system of claim 8 or 9, **characterized in that** the session receiving unit receives an initial group session and rekeying session by downloading actively from the Group Control and Keying Server under the protection of the initiation session.

11. The system of claim 10, **characterized in that** the session distributing unit distributes an updated group session and rekeying session to the group member device in a push mode under the protection of the rekeying session.

12. The system of claim 10, **characterized in that** the session receiving unit receives the updated group session and rekeying session by downloading actively under the protection of the rekeying session.

13. A management server for group control and group key management in multi-party communication security, comprising:
a first transport layer security protocol unit, adapted to run a transport layer security protocol or a datagram transport layer security protocol;
a first group key management sub-protocol unit, connected to the first transport layer security protocol unit, and adapted to run a group key management sub-protocol in the Group Control and Keying Server;
a session distributing unit, adapted to distribute a group session and a rekeying session to a group member device under the control of the first group key management sub-protocol unit; and
a rekeying unit, adapted to update automatically the key of the group session and the rekeying session under the control of the first group key management sub-protocol unit.

14. The Group Control and Keying Server of claim 13, **characterized in that** the Group Control and Keying Server further comprises:
a detecting unit, connected to the first group key management sub-protocol unit and adapted to detect whether a rekeying event occurs during the multi-party communication.

15. A group member device for realizing multi-party communication security, **characterized by** comprising:
a second transport layer security protocol unit, adapted to run the transport layer security protocol or datagram transport layer security protocol;
a second group key management sub-protocol unit, which is connected to the second transport layer security protocol unit, and is adapted to run the group key management sub-protocol in the group member device;
a session receiving unit, adapted to receive the group session and the rekeying session distributed by a the Group Control and Keying Server under the control of the second group key management sub-protocol unit.
